Europäisches Patentamt

European Patent Office

Office européen des brevets

(11) Veröffentlichungsnummer : **0 089 671
B1**

(12) **EUROPÄISCHE PATENTSCHRIFT**

(45) Veröffentlichungstag der Patentschrift :
05.03.86

(51) Int. Cl.⁴ : **G 02 B 7/00**

(21) Anmeldenummer : **83102800.6**

(22) Anmeldetag : **21.03.83**

(54) **Justiervorrichtung für eine optische Komponente, z. B. ein Objektiv, eines optischen Gerätes.**

(30) Priorität : **23.03.82 DE 3210642**

(43) Veröffentlichungstag der Anmeldung :
**28.09.83 Patentblatt 83/39**

(45) Bekanntmachung des Hinweises auf die Patenterteilung : **05.03.86 Patentblatt 86/10**

(84) Benannte Vertragsstaaten :
**BE CH FR GB IT LI**

(56) Entgegenhaltungen :
**GB-A- 2 013 928
US-A- 4 171 162**

(73) Patentinhaber : **Siemens Aktiengesellschaft
Berlin und München Wittelsbacherplatz 2
D-8000 München 2 (DE)**

(72) Erfinder : **Kohl, Rudolf, Dipl.-Ing.
Untertaxetweg 38
D-8035 Gauting (DE)**
Erfinder : **Hertl, Georg
Wolfratshauser Strasse 8
D-8029 Sauerlach (DE)**
Erfinder : **Habenschaden, Kurt, Ing. grad.
Friesenstrasse 1
D-8031 Eichenau (DE)**

**Beschreibung**

Die Erfindung betrifft eine Justiervorrichtung für eine optische Komponente, z. B. ein Objektiv, eines optischen Gerätes, insbesondere eines optischen Tag-/Nachtsicht-Zielgerätes, zur Justierung der Komponente in zwei Koordinatenrichtungen.

Bei optischen Geräten, wie z. B. bei Sicht- oder Zielgeräten, bei mit einer Visiereinrichtung kombinierten Laserentfernungsmessern oder bei Steckverbindern für optische Leitungen, ergibt sich die Notwendigkeit, optische Komponenten in bestimmter Weise zu justieren. Solche optische Komponenten sind z. B. Lochblenden, Dioden von Empfängern, Lichtwellenleiter oder Objektive, wobei diese optischen Komponenten in der Weise justierbar angeordnet sein müssen, daß ihre optische Achse in mindestens zwei Koordinatenrichtungen verstellbar ist, d. h. die betreffende optische Komponente muß in einer Ebene senkrecht zu ihrer optischen Achse verstellbar sein. Diese Forderung tritt z. B. bei zwei miteinander zu verbindenden Lichtwellenleitern auf, deren optische Achsen zueinander fluchtend ausgerichtet werden müssen. Häufig müssen bei optischen Geräten auch verschiedene Optiken aufeinander einstellbar sein, d. h. ein Objektiv muß mit seiner optischen Achse in bestimmter Weise justierbar sein. Dies ist z. B. bei der Kombination von zwei Sicht- oder Zielgeräten, insbesondere bei optischen Tag-/Nachtsicht-Zielgeräten der Fall. Hierbei wird ein Tagsicht-Zielgerät z. B. mit einem Infrarotadapter kombiniert, der es ermöglicht, ein Ziel auch bei völliger Dunkelheit zu erkennen. Dieser Adapter wandelt ein Infrarotbild in ein sichtbares Bild um, welches dadurch mit dem Tagsicht-Zielgerät beobachtet werden kann, daß es in die Visieroptik des Tagsicht-Zielgerätes eingespiegelt wird. Dabei muß bei aufgesetztem Infrarotadapter die Richtgenauigkeit und das Gesichtsfeld des Tagsicht-Zielgerätes exakt erhalten bleiben. Im Infrarotadapter sind dazu verschiedene Justierungen im optischen Strahlengang vorzunehmen. Insbesondere muß bei derartigen Geräten eine Achsharmonisierung, d. h. eine Parallelisierung der IR- und der Tagsicht-Achse herbeigeführt werden. Hierzu ist es erforderlich, ein Objektiv in zwei Koordinatenrichtungen zu justieren und nach erfolgter Einstellung mechanisch zu fixieren.

Der Erfindung liegt die Aufgabe zugrunde, eine Justiervorrichtung zu schaffen, bei der eine optische Komponente mit ihrer optische Komponente mit ihrer optischen Achse in zwei Koordinatenrichtungen justierbar ist, d. h. die optische Komponente muß in einer Ebene senkrecht zu ihrer optischen Achse verstellbar sein.

Diese Aufgabe wird bei einer Justiervorrichtung der eingangs genannten Art gemäß der Erfindung dadurch gelöst, daß die optische Komponente in einem Träger gehalten ist, der mit einer planen, zur optischen Achse der Komponente senkrechten Auflagefläche ausgebildet ist und damit an einer ebenen Referenzfläche eines stationären Körpers, z. B. an einer Wand eines Gehäuses des Gerätes, anliegt, daß an zwei einander diametral gegenüberliegenden Seiten der optischen Komponente insgesamt zwei jeweils mit einer Ringnut versehene, mit ihren Achsen gegeneinander parallel versetzte und zur optischen Achse der Komponente senkrechte Einstellschrauben seitlich in den stationären Körper eingeschraubt sind, daß an zwei entsprechenden Eckpunkten des Trägers insgesamt zwei zueinander und zur optischen Achse der Komponente parallele Stifte angeordnet sind, die an der Auflagefläche des Trägers hervorstehen und mit ihrem freien Ende in die Ringnut der Einstellschrauben greifen und daß an der Referenzfläche des stationären Körpers für den einen Stift eine bis zur Ringnut der entsprechenden Einstellschraube reichende, parallel zu deren Achsrichtung verlaufende langlochähnliche Führungsnut und für den anderen Stift eine ebenfalls bis zur Ringnut der entsprechenden Einstellschraube reichende Aussparung vorgesehen ist, deren Innenweite nach allen Richtungen so groß ist, daß der Stift seitlich zu seiner Längsachse frei in der Aussparung bewegbar ist.

Bei der erfindungsgemäßen Justiervorrichtung ist der die optische Komponente aufnehmende Träger an der Referenzfläche und somit in einer Ebene senkrecht zur optischen Achse der optischen Komponente verschiebbar. Eine Justierung in dieser Verstellebene in zwei Koordinatenrichtungen erfolgt nun durch die Einstellschrauben und die am Träger angeordneten, in die Einstellschrauben eingreifenden Stifte, d. h. bei einer Betätigung der Einstellschrauben wird der Träger über die Stifte in einer Ebene senkrecht zur optischen Achse der Komponente verstellt. Bei einer Betätigung der einen Einstellschraube bewegt sich der mit ihr zusammenwirkende Stift auf einem Kreisbogen mit einem Radius um den Mittelpunkt des anderen Stiftes. Dabei wandert der Mittelpunkt der optischen Komponente auf einem Kreisbogen z. B. in Z-Richtung. Bei einer Betätigung der anderen Einstellschraube wird der mit ihr zusammenwirkende Stift mitgenommen und aufgrund der Führungsnut in der Referenzfläche in Achsrichtung der Einstellschraube bewegt. Der Mittelpunkt der optischen Komponente wandert dann auf einer Verbindungslinie zwischen den beiden Stiften z. B. in Y-Richtung. Mit der erfindungsgemäßen Justiervorrichtung ist somit eine genaue Justierung einer optischen Komponente in zwei zueinander angenähert rechtwinkligen Koordinatenrichtungen möglich, wobei jede Richtung unabhängig von der anderen Richtung einjustiert werden kann. Die erfindungsgemäße Justiervorrichtung ist somit mit besonderem Vorteil bei optischen Geräten einsetzbar, bei denen eine Achsharmonisierung, d. h. eine Achsparallelität. z. B. zwischen dem Tag- und dem Nachtsicht-Kanal bei einer mit einem Wärmebildgerät kombinierten Visiereinrichtung, hergestellt werden muß.

Je nach Art und Verwendungszweck eines optischen Gerätes ist es in manchen Einsatzfällen zweckmäßig, die justierte optische Komponente nach erfolgter Einstellung mechanisch zu fixieren. Eine besonders vorteilhafte Weiterbildung einer erfindungsgemäßen Justiervorrichtung ist daher so ausgebildet, daß an dem Träger mindestens ein Fixierelement vorgesehen ist, daß das Fixierelement aus einem Bolzen mit einem Flanschansatz, einem Längsschlitz und einem Anschlag im Längsschlitz besteht, daß der Bolzen durch eine mit ihrer Achse senkrecht zur Achse der Einstellschrauben und parallel zur optischen Achse der optischen Komponente gerichtete erste Bohrung des Trägers greift, deren Durchmesser so gewählt ist, daß der Träger seitlich zur Längsachse des Bolzens bewegbar ist, daß der Bolzen in einer zur ersten Bohrung fluchtenden zweiten Bohrung in der Referenzfläche des stationären Körpers axial verschiebbar geführt ist, daß mindestens eine Konterschraube seitlich in den stationären Körper eingeschraubt ist und daß die Konterschraube mit einem kegelförmigen Bereich ausgebildet ist und in den Längsschlitz des Fixierelementes eingreift. Bei einer derartigen Vorrichtung erfolgt die Fixierung der eingestellten Lage der optischen Komponente durch eine zur Achse der Einstellschrauben senkrecht wirkende Kraft über mindestens ein als Bolzen ausgebildetes Fixierelement, d. h. der Fixiervorgang findet in einer anderen Ebene als der Justiervorgang statt. Auf diese Weise wird die Justierung von der sich anschließenden mechanischen Fixierung der optischen Komponente unabhängig.

Zweckmäßigerweise ist bei einer derartigen Weiterbildung einer erfindungsgemäßen Justiervorrichtung zwischen dem Träger der optischen Komponente und dem Flanschansatz des Fixierelementes eine Federscheibe angeordnet, die eine geringe Vorspannung im nicht fixierten Zustand erzeugt. Diese Vorspannung zwischen dem Träger und der Referenzfläche ist für den Justiervorgang vorteilhaft.

Bei optischen Geräten, z. B. bei Tag-/Nachtsicht-Zielgeräten, ist es manchmal erwünscht oder sogar erforderlich, die Einstellung der zu justierenden optischen Komponente bei der Endjustierung des Gerätes vornehmen zu können. Bei einer vorteilhaften Ausführungsform einer erfindungsgemäßen Justiervorrichtung sind daher die Einstellschrauben und die Konterschrauben für das Fixierelement an einer von der Geräteaußenseite her zugänglichen Stelle des stationären Körpers angeordnet. Damit ist es möglich, die Justierung der optischen Komponente bei der Endjustierung des Gerätes vorzunehmen und die Einstellung z. B. einer Achsharmonisierung zwischen einem Tag- und einem Nachsichtkanal gegebenenfalls auch später erneut vornehmen zu können, wenn das Tagsicht- und das Nachtsichtgerät komplett zusammengebaut sind. Dies ist im allgemeinen jedoch nicht erforderlich, da mit einer erfindungsgemäßen Justiervorrichtung das Nachtsichtgerät bereits so vorjustiert werden kann, daß es lediglich auf das Tagsichtgerät aufgesetzt zu werden braucht, wobei damit bereits die Parallelität der beiden optischen Achsen sichergestellt ist.

Ein vorteilhaftes Ausführungsbeispiel einer erfindungsgemäßen Justiervorrichtung zur Justierung einer optischen Komponente in zwei Koordinatenrichtungen ist im folgenden anhand der Zeichnung näher beschrieben.

Figur 1 zeigt eine in einem Träger aufgenommene optische Komponente mit Justier- und Kontervorrichtung in Vorderansicht,

Figur 2 einen Schnitt II-II nach Fig. 1 mit einer Einstellschraube und einer Kontervorrichtung,

Figur 3 in schematisierter Darstellung einen Justiervorgang in einer Koordinatenrichtung und

Figur 4 in entsprechender Darstellung den Justiervorgang in der anderen Koordinatenrichtung.

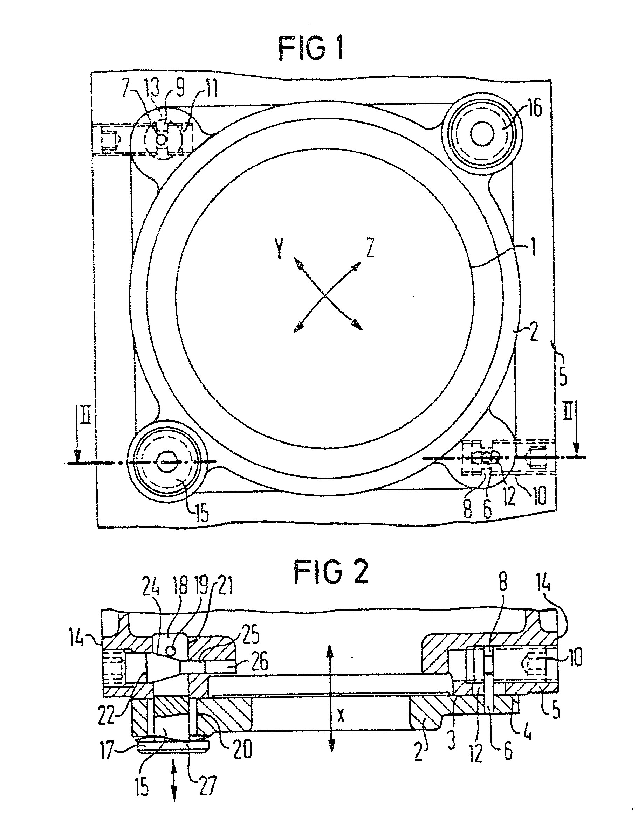

Bei dem dargestellten Ausführungsbeispiel ist die Justiervorrichtung zur Einstellung eines Objektives eines optischen Tag-/Nachtsicht-Zielgerätes in zwei Koordinatenrichtungen vorgesehen, um eine Achsharmonisierung des Tag- und des Nachtsichtkanals herbeizuführen. Das Objektiv 1 umfaßt mindestens eine Linse, welche mit ihrer Fassung in einer Gewindebohrung einer Trägerplatte 2 befestigt ist. Diese Trägerplatte 2 ist mit einer planen, zur optischen Achse des Objektives 1 senkrechten Auflagefläche 3 ausgebildet und liegt damit an einer ebenen Referenzfläche eines stationären Körpers an, welche hier von der Stirnfläche 4 des Gehäuses 5 des Gerätes, z. B. von dem Optikblock eines Infrarotadapters, gebildet wird (Fig. 2). Die Trägerplatte 2 ist zunächst in dieser Ebene frei verschiebbar, wobei die Justierung des Objektives 1 in X-Richtung, also in Richtung der optischen Achse des Objektives, durch die Befestigung in der Trägerplatte, die Auflage und die planen Flächen 3 und 4 der Trägerplatte 2 bzw. des Gehäuses 5 gegeben ist. Das Objektiv 1 ist in zwei zueinander angenähert rechtwinkligen Koordinatenrichtungen Y und Z durch seitliche Einstellelemente zu verstellen und durch zwei weitere Elemente in seiner Lage zu fixieren.

Zur Justierung des Objektives sind an zwei Eckpunkten der Trägerplatte 2 an zwei einander diametral gegenüberliegenden Seiten des Objektives zwei zueinander und zur optischen Achse des Objektives parallele Paßstifte 6 bzw. 7 in die Trägerplatte eingepreßt, die an der Auflagefläche 3 hervorstehen und in eingedrehte Ringnuten 8 bzw. 9 von zwei Einstellschrauben 10 bzw. 11 eingreifen, welche an zwei einander diametral gegenüberliegenden entsprechenden Seiten des Objektives zueinander parallel und mit ihrer Achse senkrecht zur optischen Achse des Objektives seitlich in Gewindebohrungen an den Seitenflächen 14 des Gehäuses 5 eingeschraubt sind.

Die Einstellschrauben sind hier kopflos und mit einem Schlitz oder einem Innensechskant ausgebildet. Die Breite der Ringnuten 8, 9 der Einstellschrauben 10, 11 entspricht dem Durchmesser der Paßstifte 6, 7. Um das Eingreifen der Stifte in die Ringnuten und die Verstellung des Objektives 1 in der gewünschten Weise überhaupt zu ermöglichen, ist an der Stirnfläche 4 des Gehäuses 5 zum Durchtritt des einen Paßstiftes 6 eine bis zur Ringnut 8 reichende, parallel zu der Achsrichtung der Einstellschraube 10 verlaufende langlochähnliche Führungsnut 12 vorgesehen, deren Breite dem Durchmesser des Paßstiftes 6 entspricht und deren Länge dem erforderlichen Verstellweg angepaßt ist. Für den anderen in die Einstellschraube 11 eingreifenden Paßstift 7 ist in der Stirnfläche 4 eine bis zur Ringnut 9 reichende Aussparung 13, z. B. eine kreisrunde Bohrung vorgesehen, deren Durchmesser so groß ist, daß der Paßstift 7 seitlich zu seiner Längsachse in dem erforderlichen Maße frei in der Bohrung bewegbar ist.

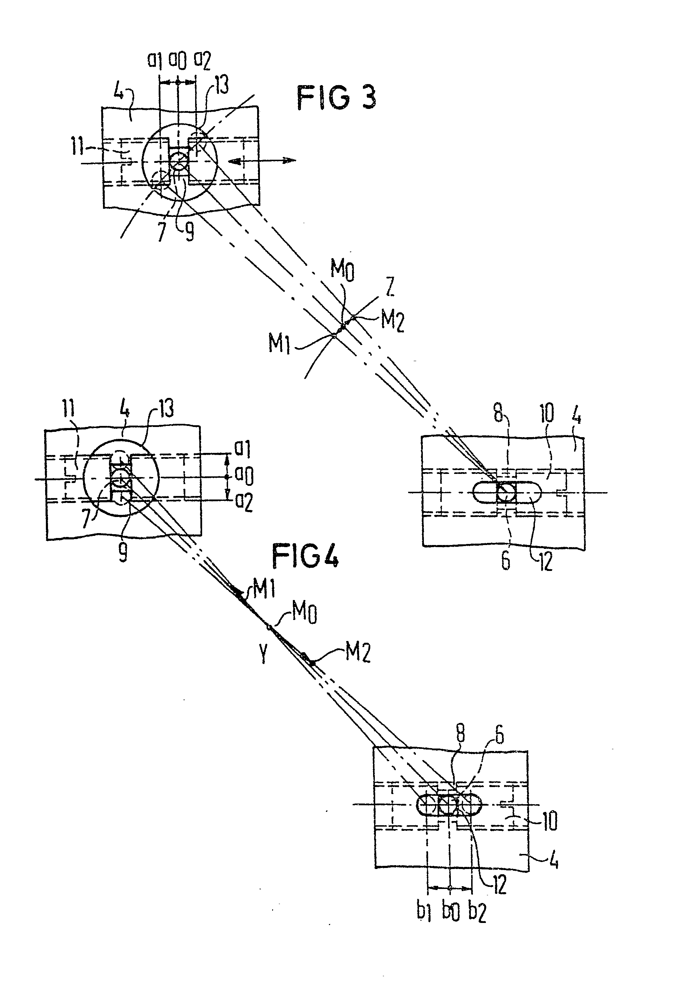

Der Justiervorgang des Objektives 1 für die Z-Richtung ist in Fig. 3 gesondert dargestellt. Dabei ist die Trägerplatte 2 für das Objektiv 1 vereinfacht als strichpunktierte Linie zwischen den Paßstiften 6 und 7 eingezeichnet. Die Mitte $M_0$ dieser Linie ist der Mittelpunkt des Objektives 1. Wird nun die Einstellschraube 11 von ihrer Nullstellung $a_0$ nach Position $a_2$ oder $a_1$ in Pfeilrichtung, also in Richtung ihrer Längsachse verstellt, so bewegt sich der Paßstift 7 auf einem Kreisbogen mit dem Radius um den Mittelpunkt des anderen Paßstiftes 6, da dieser im Kreuzungspunkt zwischen der Ringnut 8 in der Einstellschraube 10 und der Führungsnut 12 im Gehäuse 5 drehbar ist, während sein Achsmittelpunkt fixiert ist. Bei diesem Einstellvorgang wandert somit der Mittelpunkt des Objektives 1 von $M_0$ nach $M_2$ oder $M_1$ in Z-Richtung.

Der Justiervorgang für die Y-Richtung ist in Fig. 4 gesondert dargestellt. Für diese Justierung ist die Einstellschraube 10 maßgebend. Wird sie von ihrer Nullstellung $b_0$ nach Position $b_1$ oder $b_2$ in Pfeilrichtung bzw. in Richtung ihrer Längsachse verstellt, so wird der Paßstift 6 über die Ringnut 8 in der Einstellschraube 10 mitgenommen und aufgrund der Führungsnut 12 an der Stirnfläche 4 des Gehäuses 5 in Achsrichtung der Schraube geführt. Der andere Paßstift 7, welcher in die Ringnut 9 der anderen Einstellschraube 11 eingreift, wird dabei über die Trägerplatte 2 von seiner Ausgangslage $a_0$ nach Position $a_1$ oder $a_2$ bewegt. Der Mittelpunkt des Objektives 1 wandert dabei auf einer Verbindungslinie zwischen den Paßstiften 6 und 7 von $M_0$ nach $M_1$ oder $M_2$, also in einer angenäherten Geradführung. Auf diese Weise ist mit der Justiervorrichtung eine Einstellung des Objektives bzw. dessen optischer Achse in zwei zueinander angenähert rechtwinkligen Koordinatenrichtungen möglich, wobei diese beiden Koordinatenrichtungen unabhängig voneinander verstellt werden können.

Die Fixierung der eingestellten Lage des Objektives erfolgt in nachfolgend näher beschriebener Weise durch eine senkrecht zu den Achsen der Einstellschrauben wirkende Kraft, so daß die Justierung von der sich anschließenden Fixierung unabhängig ist.

Zur Fixierung ist an mindestens einer Stelle, hier an zwei weiteren einander diametral gegenüberliegenden Eckpunkten der Trägerplatte 2 je ein Fixierelement 15 bzw. 16 (Fig. 1, 2) vorgesehen. Dieses Fixierelement ist als Bolzen ausgebildet, der mit einem Flanschansatz 17 (Fig. 2), einem Längsschlitz 18 und einem senkrecht zum Längsschlitz in diesem angeordneten, in den Bolzen eingepreßten Stift 19 als Anschlag versehen ist. Der Bolzen 15 bzw. 16 greift durch eine mit ihrer Achse senkrecht zur Achse der Einstellschrauben und parallel zur optischen Achse des Objektives 1 gerichtete Bohrung 20 an der Stirnfläche 4 der Trägerplatte 2, wobei der Durchmesser dieser Bohrung so gewählt ist, daß die Trägerplatte seitlich zur Längsachse der Bolzen bewegbar ist. Außerdem ist der Bolzen in einer weiteren zur Bohrung 20 fluchtenden und als Paßbohrung ausgebildeten Bohrung 21 im Gehäuse 5 axial verschiebbar geführt. Zum Verstellen und Festspannen der Fixierelemente sind zwei zueinander und zu den Einstellschrauben 10, 11 parallele, also zu den Fixierelementen 15, 16 senkrechte Konterschrauben 22 vorgesehen, welche an der Seitenfläche 14 in das Gehäuse eingeschraubt sind. Von diesen Konterschrauben ist in Fig. 2 nur die eine Konterschraube 22 sichtbar. Jede Konterschraube ist mit einem kegelförmig angedrehten Bereich 24 ausgebildet, mit dem sie in den Längsschlitz 18 des Bolzens eingreift und mit dem Stift 19 im Längsschlitz zusammenwirkt. Beim Eindrehen der z. B. mit einem Innensechskant ausgebildeten und im Anschluß an den kegelförmigen Bereich 24 mit einem zylindrischen Ansatz 25 kleineren Durchmessers in einer Bohrung 26 des Gehäuses geführten Konterschraube 22 gleitet der Stift 19 mit dem Bolzen 15 bzw. 16 entlang des Kegels 24 und preßt mit Hilfe des Flanschansatzes 17 die Trägerplatte 2 gegen die Stirnfläche 4 des Gehäuses. Um bei diesem Vorgang das Eingreifen des Kegels 24 der Konterschraube 22 in den Längsschlitz 18 des Bolzens 15 zu erleichtern, ist es zweckmäßig, wenn der Längsschlitz an der Kegeleinführseite breiter geöffnet ist als an der gegenüberliegenden Austrittsseite für den zylindrischen Ansatz 25. Schließlich ist zwischen der Trägerplatte 2 und dem Flanschansatz 17 des Fixierelementes 15 noch eine gewellte Federscheibe 27 angeordnet, die eine geringe Vorspannung im nicht fixierten Zustand der Trägerplatte erzeugt.

Um die Einstellung des Objektives 1 über eine Verstellung der Trägerplatte 2 bei der Endjustierung eines Gerätes vornehmen zu können, sind alle Einstellelemente, also die Einstellschrauben 10 und 11 sowie die Konterschrauben 22 dadurch von der Geräteaußenseite her leicht zugänglich, daß sie in die nach außen gewandten Gehäuseseitenflächen 14 eingeschraubt sind.

**Patentansprüche**

1. Justiervorrichtung für eine optische Komponente, z. B. ein Objektiv, eines optischen Gerätes, insbesondere eines optischen Tag-/Nachtsicht-Zielgerätes, zur Justierung der Komponente in zwei Koordinatenrichtungen, dadurch gekennzeichnet,

daß die optische Komponente (1) in einem Träger (2) gehalten ist, der mit einer planen, zur optischen Achse der Komponente senkrechten Auflagefläche (3) ausgebildet ist und damit an einer ebenen Referenzfläche (4) eines stationären Körpers (5), z. B. an einer Wand eines Gehäuses des Gerätes, anliegt,

daß an zwei einander diametral gegenüberliegenden Seiten der optischen Komponente (1) insgesamt zwei jeweils mit einer Ringnut (8, 9) versehene, mit ihren Achsen gegeneinander parallelversetzte und zur optischen Achse der Komponente (1) senkrechte Einstellschrauben (10, 11) seitlich in den stationären Körper (5) eingeschraubt sind,

daß an zwei entsprechenden Eckpunkten des Trägers (2) insgesamt zwei zueinander und zur optischen Achse der Komponente (1) parallele Stifte (6, 7) angeordnet sind, die an der Auflagefläche (3) des Trägers (2) hervorstehen und mit ihrem freien Ende in die Ringnut (8, 9) der Einstellschrauben (10, 11) greifen

und daß an der Referenzfläche (4) des stationären Körpers (5) für den einen Stift (6) eine bis zur Ringnut (8) der entsprechenden Einstellschraube (10) reichende, parallel zu deren Achsrichtung verlaufende langlochähnliche Führungsnut (12) und für den anderen Stift (7) eine ebenfalls bis zur Ringnut (9) der entsprechenden Einstellschraube (11) reichende Aussparung (13) vorgesehen ist, deren Innenweite nach allen Richtungen so groß ist, daß der Stift seitlich zu seiner Längsachse frei in der Aussparung bewegbar ist.

2. Justiervorrichtung nach Anspruch 1, dadurch gekennzeichnet,

daß an dem Träger (2) mindestens ein Fixierelement (15, 16) vorgesehen ist,

daß das Fixierelement (15, 16) aus einem Bolzen mit einem Flanschansatz (17), einem Längsschlitz (18) und einem Anschlag (19) im Längsschlitz besteht,

daß der Bolzen (15, 16) durch eine mit ihrer Achse senkrecht zur Achse der Einstellschrauben (10, 11) und parallel zur optischen Achse der optischen Komponente (1) gerichtete erste Bohrung (20) des Trägers (2) greift, deren Durchmesser so gewählt ist, daß der Träger seitlich zur Längsachse des Bolzens bewegbar ist,

daß der Bolzen (15, 16) in einer zur ersten Bohrung (20) fluchtenden zweiten Bohrung (21) in der Referenzfläche (4) des stationären Körpers (5) axial verschiebbar geführt ist, daß mindestens eine Konterschraube (22) seitlich in den stationären Körper (5) eingeschraubt ist

und daß die Konterschraube (22) mit einem kegelförmigen Bereich (24) ausgebildet ist und in den Längsschlitz (18) des Fixierelementes (15, 16) eingreift.

3. Justiervorrichtung nach Anspruch 1 und 2, dadurch gekennzeichnet, daß die Einstellschrauben (10, 11) und die Konterschraube (22) für das Fixierelement (15, 16) an einer von der Geräteaußenseite her zugänglichen Stelle (14) des stationären Körpers (5) angeordnet sind.

4. Justiervorrichtung nach Anspruch 2 oder 3, dadurch gekennzeichnet, daß zwischen dem Träger (2) der optischen Komponente (1) und dem Flanschansatz (17) des Fixierelementes (15, 16) eine Federscheibe (27) angeordnet ist.

**Claims**

1. An adjusting device for an optical component such as the objective of an optical apparatus, in particular of an optical day/night target viewing apparatus, for adjusting the component in two coordinate directions, characterised in

that the optical component (1) is retained in a carrier (2) designed with a plane contact surface (3) at right angles to the optical axis of the component, and rests therewith against a plane reference surface (4) of a stationary body (5), e. g. against a wall of a housing of the apparatus ;

that on two diametrically opposed sides of the optical component (1) a total of two adjusting screws (10, 11) are screwed laterally into the stationary body (5), each provided with an annular groove (8, 9) and having their axes staggered in parallel and at right angles to the optical axis of the component (1) ;

that at two corresponding corner points of the carrier (2) a total of two pins (6, 7) are arranged parallel to one another and to the optical axis of the component (1) to protrude on the contact surface (3) of the carrier (2) and engage their free end into the annular groove (8, 9) of the adjusting screws (10, 11) ;

and that on the reference surface (4) of the stationary body (5), for the one pin (6) there is arranged a slotted guide groove (12) which extends to the annular groove (8) of the corresponding adjusting screw (10) and runs parallel to the axial direction thereof, and for the other pin (7) there is arranged a recess (13) which likewise extends to the annular groove (9) of the corresponding adjusting screw (11) and whose inner width is so large in all directions that the pin can be freely moved in the recess laterally to its longitudinal axis.

2. An adjusting device as claimed in Claim 1, characterised in that at least one fixing element (15, 16) is arranged on the carrier (2) ;

that the fixing element (15, 16) consists of a bolt having a flanged attachment (17), a longitudinal slot (18) and stop (19) in the longitudinal slot ;

that the bolt (15, 16) grips through a first bore (20) of the carrier (2) which has its axis directed at right angles to the axis of the adjusting screws (10, 11) and parallel to the optical axis of the optical component (1), and whose diameter is selected to be such that the carrier can be laterally moved to the longitudinal axis of the bolt ;

that the bolt (15, 16) is guided to be axially displaceable in a second bore (21) in the reference surface (4) of the stationary body (5) which is in alignment with the first bore (20), that at least one counter-screw (22) is screwed laterally into the stationary body (5) ;

and that the counter-screw (22) has a conical region (24) and engages into the longitudinal slot (18) of the fixing element (15, 16).

3. An adjusting device as claimed in Claim 1 and 2, characterised in that the adjusting screws (10, 11) and the counter-screw (22) for the fixing element (15, 16) are arranged at a point (14) of the stationary body (5) accessible from the outer side of the housing.

4. An adjusting device as claimed in Claim 2 or 3, characterised in that a spring plate (27) is arranged between the carrier (2) of the optical component (1) and the flanged attachment (17) of the fixing element (15, 16).

## Revendications

1. Dispositif de réglage d'un composant optique, par exemple d'un objectif, d'un appareil optique, notamment d'un viseur optique pour visée diurne/nocturne, pour le réglage des composants dans deux directions de coordonnées, caractérisé par le fait

que le composant optique (1) est maintenu dans un support (2) qui est réalisé avec une surface d'appui plane (3) perpendiculaire à l'axe optique du composant et qui repose par conséquent sur une surface de référence plane (4) d'un corps fixe (5), par exemple sur une paroi d'un boîtier de l'appareil,

qu'au total deux vis de réglage (10, 11), comportant chacune une gorge annulaire (8, 9) et qui possèdent des axes décalés en étant parallèles entre eux, et qui sont perpendiculaires à l'axe optique du composant (1), sont vissées dans le corps fixe (5), sur deux côtés diamétralement opposés du composant optique (1), et

qu'au total deux broches (6, 7), qui sont parallèles entre elles et à l'axe optique du composant (1), font saillie sur la surface d'appui (3) du support (2) et s'engagent par leur extrémité libre dans la gorge annulaire (8, 9) des vis de réglage (10, 11), sont disposées au niveau de deux coins correspondants du support (1), et

qu'il est prévu, au niveau d'une surface de référence (4) du corps fixe (5) pour l'une des broches (6) une rainure de guidage (12) en forme de trou allongé s'étendant jusqu'à la gorge annulaire (8) de la vis de réglage correspondante (10) et ce parallèlement à la direction de l'axe de cette vis, et pour l'autre broche (7) un évidement (13) s'étendant également jusqu'à la gorge annulaire (9) de la vis de réglage correspondante (11) et dont la dimension intérieure est suffisamment importante dans toutes les directions pour que la broche puisse être déplacée librement latéralement par rapport à son axe longitudinal, dans l'évidement.

2. Dispositif de réglage suivant la revendication 1, caractérisé par le fait

qu'il est prévu au moins un organe de fixation (15, 16),

que l'organe de fixation (15, 16) est constitué par un goujon comportant une collerette formant bride (17), une fente longitidunale (18) et une butée (19) située dans la fente longitudinale,

que le goujon (15, 16) s'engage dans un premier perçage (20) du support (2), dont l'axe est perpendiculaire à l'axe des vis de réglage (10, 11) et est parallèle à l'axe optique du composant optique (1) et dont le diamètre est choisi de manière que le support soit déplaçable latéralement par rapport à l'axe longitudinal du goujon,

que le goujon (15, 16) est guidé en étant déplaçable axialement dans un second perçage (21), aligné avec le premier perçage (20) et ménagé dans la surface de référence (4) du corps fixe (5), qu'au moins une vis de blocage (22) est vissée latéralement dans le corps fixe (5) et

que la vis de blocage (22) est réalisée avec une partie conique (24) et s'engage dans la fente longitudinale (18) de l'organe de fixation (15, 16).

3. Dispositif de réglage suivant les revendications 1 et 2, caractérisé par le fait que les vis de réglage (10, 11) et la vis de blocage (22) pour l'organe de fixation (15, 16) sont montées en un emplacement (14) du corps fixe (5), qui est accessible à partir de la face extérieure de l'appareil.

4. Dispositif de réglage suivant la revendication 2 ou 3, caractérisé par le fait qu'un ressort Belleville (27) est monté entre le support (2) du composant optique (1) et la collerette formant bride (17) de l'organe de fixation (15, 16).

0 089 671

FIG 1

FIG 2

FIG 3

FIG 4

0 089 671

2